# FASCICULE DE BREVET EUROPEEN

(11) **EP 4 265 109 B1**
(45) Date de publication et mention de la délivrance du brevet: **03.07.2024**
(21) Numéro de dépôt: 23166673.6
(22) Date de dépôt: 05.04.2023
(51) Int. Cl.: A01M 7/00

(54) **ENGIN AGRICOLE AUTONOME DE PULVÉRISATION COMPRENANT DEUX RÉSERVOIRS LATÉRAUX**
SELBSTFAHRENDE LANDWIRTSCHAFTLICHE SPRÜHVORRICHTUNG MIT ZWEI SEITLICHEN BEHÄLTERN
AUTONOMOUS AGRICULTURAL SPRAYING MACHINE COMPRISING TWO LATERAL TANKS

(30) Priorité: 21.04.2022 FR 2203724
(43) Date de publication de la demande: 25.10.2023
(73) Titulaire: Exel Industries, 51200 Epernay (FR)
(72) Inventeur: JEANTET, Paul, 75015 PARIS (FR); GAUTHIER, Philippe, 51150 Condé sur Marne (FR)
(74) Mandataire: Argyma

(56) Documents cités:
- EP-A1- 2 815 644
- WO-A1-2010/002274
- FR-A1- 2 565 000

## Description

### Domaine technique

La présente invention concerne le domaine des engins agricoles autonomes. En particulier, la présente invention vise un engin agricole autonome de pulvérisation de produit de traitement sur des cultures, comprenant notamment deux réservoirs disposés sur chaque côté, entre la roue avant et la roue arrière, et vise la gestion de l'équilibrage des masses entre les deux réservoirs.

Plus précisément, la présente invention propose un système et un procédé d'aspiration séquencée pour assurer l'équilibrage d'au moins deux réservoirs latéraux d'un engin agricole autonome de pulvérisation.

### ETAT DE LA TECHNIQUE

L'état de la technique comprend des exemples d'engin agricole autonome de pulvérisation, dont la fonction est de pulvériser un produit de traitement liquide sur des cultures. Par exemple, un tel engin agricole autonome de pulvérisation connu peut être configuré pour pulvériser un produit actif sur des vignes. De tels engins agricoles autonomes présentent une ossature et quatre roues, ainsi que deux réservoirs latéraux, disposés sur ses flancs, entre la roue avant et la roue arrière, de chaque côté.

Une problématique générale, dans ce contexte, concerne la gestion de l'équilibrage entre les deux réservoirs. En effet, il convient de s'assurer que le niveau de remplissage des deux réservoirs reste similaire tout au long du fonctionnement de l'engin agricole autonome, afin d'éviter tout déséquilibre de ce dernier, qui pourrait résulter dans un renversement dudit engin sur un flanc, en particulier dans un contexte de parcelle agricole à traiter qui serait accidentée ou en dévers.

Une problématique supplémentaire concerne la gestion de l'aspiration entre les deux réservoirs, à partir d'une unique pompe de pulvérisation, et tout particulièrement en fond de réservoir. En effet, il devient alors critique d'assurer un équilibrage efficace afin d'éviter d'aspirer de l'air d'un côté, car cela rendrait l'aspiration impossible de l'autre.

Une technique connue consiste à relier les réservoirs latéraux par un câble hydraulique permettant au produit de traitement contenu dans les réservoirs de circuler d'un réservoir à l'autre, de façon à assurer l'équilibre de l'engin.

Le document EP 2815644 A1 divulgue ainsi un engin agricole autonome de pulvérisation comprenant deux réservoirs reliés hydrauliquement pour tenir compte des pentes et des dévers. Les deux réservoirs latéraux, entre les roues, sur chaque flanc de l'engin agricole autonome, sont ainsi reliés par un canal de liaison en U retourné.

La gestion de l'équilibrage entre les deux réservoirs est réalisée par l'intermédiaire d'un transfert de liquide entre les deux réservoirs via le canal de liaison en U retourné.

Toutefois, en cas de dévers, le réservoir le plus en hauteur se vide dans le réservoir plus bas, qui risque de déborder.

Pour éviter ce problème, une solution connue consiste à gérer le niveau dans les deux réservoirs, en complément, au moyen de vannes manuelles dont l'ouverture et la fermeture sont gérées directement par un pilote, ce qui est fastidieux et complexe, et inadapté à un engin agricole autonome.

Pour pallier ce problème, la présente invention propose un système et un procédé d'aspiration séquencée, alternativement dans chacun des réservoirs. En outre, l'invention peut comprendre une séquence spécifique de gestion de fin de réservoir, ainsi que des interruptions de l'aspiration, afin d'améliorer le fonctionnement de l'engin agricole en autonomie.

### PRESENTATION DE L'INVENTION

Plus précisément, l'invention a pour objet un engin agricole autonome de pulvérisation comprenant un premier et un deuxième réservoirs latéraux disposés substantiellement entre une roue avant et une roue arrière respectivement de chaque côté de l'engin, l'engin agricole autonome de pulvérisation comprenant par ailleurs un système de pulvérisation, au moins une pompe de pulvérisation, une première vanne d'aspiration autorisant ou interdisant l'aspiration de produit de traitement dans le premier réservoir latéral, une deuxième vanne d'aspiration autorisant ou interdisant l'aspiration de produit de traitement dans le deuxième réservoir latéral, une vanne de régulation couplée à une vanne de pulvérisation configurées pour fournir du produit de traitement au système de pulvérisation et un module de séquençage configuré de sorte que :
durant une première étape d'aspiration, la première vanne d'aspiration est ouverte et la deuxième vanne d'aspiration est fermée, de sorte qu'on aspire du produit de traitement uniquement dans le premier réservoir latéral au moyen de la pompe de pulvérisation, pendant une durée d'aspiration isolée prédéfinie, par exemple égale à une minute ;
durant une étape de transition faisant suite à la première étape d'aspiration, la première vanne d'aspiration et la deuxième vanne d'aspiration sont ouvertes, de sorte qu'on aspire du produit de traitement simultanément dans le premier réservoir latéral et dans le deuxième réservoir latéral au moyen de la pompe de pulvérisation, pendant une durée de transition prédéfinie, courte par rapport à la durée d'aspiration isolée prédéfinie, par exemple égale à deux secondes ;
durant une deuxième étape d'aspiration, faisant suite à l'étape de transition, la deuxième vanne d'aspiration est ouverte et la première vanne d'aspiration est fermée, de sorte qu'on aspire du produit de traitement uniquement dans le deuxième réservoir latéral au moyen de la pompe de pulvérisation, pendant la durée d'aspiration isolée prédéfinie, par exemple égale à une minute,
le module de séquençage étant par ailleurs configuré pour mettre en oeuvre successivement et de façon itérative la première étape d'aspiration, l'étape de transition, la deuxième étape d'aspiration puis à nouveau l'étape de transition.

Avantageusement, l'engin agricole autonome de pulvérisation selon l'invention comprend par ailleurs une cuve tampon connectée d'une part à la vanne de régulation et d'autre part aux premier et deuxième réservoirs latéraux, la cuve tampon recevant du surplus de produit de traitement issu de la vanne de régulation, le surplus de produit de traitement contenu dans la cuve tampon étant refoulé vers les premier et deuxième réservoirs latéraux, l'engin agricole autonome comprenant par ailleurs une première vanne de retour et une deuxième vanne de retour, le module de séquençage étant configuré de sorte que la première vanne de retour est ouverte pendant la première étape d'aspiration et pendant l'étape de transition et fermée pendant la deuxième étape d'aspiration et de sorte que la deuxième vanne de retour est ouverte pendant la deuxième étape d'aspiration et pendant l'étape de transition et fermée pendant la première étape d'aspiration.

Selon un mode de réalisation, le système de pulvérisation comprend au moins un panneau de confinement configuré pour collecter du produit de traitement après pulvérisation et l'acheminer vers au moins une cuve de récupération, l'engin agricole autonome de pulvérisation comprenant par ailleurs au moins une pompe de récupération, notamment une pompe péristaltique, pour acheminer le produit de traitement contenu dans la cuve de récupération vers la cuve tampon.

En particulier, l'engin agricole autonome de pulvérisation selon l'invention peut comprendre par ailleurs une première vanne d'agitation et une deuxième vanne d'agitation, une portion de produit de traitement aspirée dans le premier réservoir latéral et/ou dans le deuxième réservoir latéral étant refoulée vers les premier et deuxième réservoirs latéraux en amont de la vanne de régulation, le module de séquençage étant configuré de sorte que la première vanne d'agitation est ouverte pendant la première étape d'aspiration et pendant l'étape de transition et fermée pendant la deuxième étape d'aspiration et de sorte que la deuxième vanne d'agitation est ouverte pendant la deuxième étape d'aspiration et pendant l'étape de transition et fermée pendant la première étape d'aspiration.

Avantageusement, l'engin agricole autonome de pulvérisation comprend par ailleurs un premier injecteur d'agitation agencé dans le premier réservoir latéral et un deuxième injecteur d'agitation agencé dans le deuxième réservoir latéral, le premier injecteur d'agitation étant configuré pour injecter le surplus de produit de traitement refoulé via la première vanne d'agitation dans le premier réservoir latéral de façon à entretenir un mouvement de produit de traitement dans le premier réservoir latéral et, respectivement, le deuxième injecteur d'agitation étant configuré pour injecter le surplus de produit de traitement refoulé via la deuxième vanne d'agitation dans le deuxième réservoir latéral de façon à entretenir un mouvement de produit de traitement dans le deuxième réservoir latéral.

Avantageusement, les premier et deuxième réservoirs latéraux présentent une forme en diamant inversé présentant au moins deux parois latérales, forme selon laquelle chaque paroi latérale est orientée de sorte à orienter le produit de traitement en direction d'un siphon aboutissant dans une voie d'aspiration reliée à la pompe de pulvérisation.

Selon un mode de réalisation, le module de séquençage est en outre configuré pour mettre en oeuvre une étape finale de gestion de fin de cycle, lorsque la quantité de produit de traitement contenue dans l'un des premier et deuxième réservoirs latéraux passe sous un seuil déclencheur prédéfini.

La présente invention vise aussi un procédé d'aspiration séquencée pour un engin agricole autonome de pulvérisation comprenant un premier réservoir latéral et un deuxième réservoir latéral contenant chacun du produit de traitement, le procédé d'aspiration séquencée comprenant :
une première étape d'aspiration, durant laquelle on aspire du produit de traitement uniquement dans le premier réservoir latéral et on bloque tout transfert de produit de traitement depuis le premier réservoir latéral vers le deuxième réservoir latéral, pendant une durée d'aspiration isolée prédéfinie, par exemple égale à une minute ;
une étape de transition faisant suite à la première étape d'aspiration, durant laquelle on aspire du produit de traitement simultanément dans le premier réservoir latéral et dans le deuxième réservoir latéral, pendant une durée de transition prédéfinie, courte par rapport à la durée d'aspiration isolée prédéfinie, par exemple égale à deux secondes
une deuxième étape d'aspiration, faisant suite à l'étape de transition, durant laquelle on aspire du produit de traitement uniquement dans le deuxième réservoir latéral et on bloque tout transfert de produit de traitement depuis le deuxième réservoir latéral vers le premier réservoir latéral, pendant la durée d'aspiration isolée prédéfinie, par exemple égale à une minute,
la première étape d'aspiration, l'étape de transition, la deuxième étape d'aspiration puis à nouveau l'étape de transition étant mises en oeuvre de façon itérative.

Selon un mode de réalisation, le procédé d'aspiration séquencée comprend par ailleurs une étape finale de gestion de fin de cycle, mise en oeuvre lorsque la quantité de produit de traitement contenue dans l'un des premier et deuxième réservoirs latéraux passe sous un seuil déclencheur prédéfini, l'étape de gestion de fin de cycle comprenant la substitution de l'étape de transition à la première ou à la deuxième étape d'aspiration, selon le cas, correspondant à l'aspiration de produit de traitement dans celui parmi le premier et le deuxième réservoirs latéraux qui contient une quantité de produit de traitement inférieure au seuil déclencheur prédéfini.

Selon un mode de réalisation, le procédé d'aspiration séquencée comprend la mesure du niveau de produit de traitement dans chacun des premier et deuxième réservoirs latéraux et, lorsque les niveaux de produit de traitement dans les premier et deuxième réservoirs latéraux sont tous deux inférieurs au seuil déclencheur prédéfini, le procédé d'aspiration séquencée est stoppé.

Selon un mode de réalisation, le procédé d'aspiration séquencée comprend la mesure du niveau de produit de traitement dans chacun des premier et deuxième réservoirs latéraux et la comparaison des niveaux de produit de traitement respectifs dans les premier et deuxième réservoirs latéraux à un différentiel prédéfini, par exemple égal à 15% de la contenance d'un réservoir latéral ; si le différentiel de niveau de produit de traitement entre les premier et deuxième réservoirs latéraux est supérieur au différentiel prédéfini, alors la première étape d'aspiration ou la deuxième étape d'aspiration est ignorée pour celui parmi le premier et le deuxième réservoirs latéraux qui a le niveau de produit de traitement le plus bas, jusqu'à ce que le différentiel de niveau de produit de traitement entre les premier et deuxième réservoirs latéraux change de sens.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La [Fig. 1] montre une vue de côté d'un engin agricole autonome mettant en oeuvre l'invention, sur un terrain plat ;
La [Fig.2] montre une vue de côté d'un engin agricole autonome mettant en oeuvre l'invention, sur un terrain en pente ;
La [Fig.3] montre une vue en coupe transversale d'un engin agricole autonome de pulvérisation mettant en oeuvre l'invention, sur un terrain plat ;
La [Fig.4] montre une vue en coupe transversale d'un engin agricole autonome de pulvérisation mettant en oeuvre l'invention, sur un terrain en dévers ;
La [Fig.5] est une représentation schématique d'un mode de réalisation du système selon l'invention ;
La [Fig.6] est un schéma bloc représentant le procédé d'aspiration séquencée selon l' invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne la gestion de l'équilibrage entre deux réservoirs latéraux d'un engin agricole autonome de pulvérisation. Les deux réservoirs latéraux contiennent en particulier un produit de traitement. Par exemple, l'engin agricole autonome de pulvérisation est un enjambeur quatre roues, autonome, conçu pour le traitement de vignes. Les réservoirs latéraux sont notamment disposés de part et d'autre, entre la roue avant et la roue arrière de l'engin.

La présente invention propose de réaliser une aspiration séquencée dans chacun des réservoirs latéraux afin d'assurer un équilibre des masses, et par conséquent la stabilité de l'engin agricole autonome de pulvérisation.

L'invention permet aussi, selon un mode de réalisation, de résoudre des problèmes d'aspiration en fond de réservoir lors de l'utilisation d'une unique pompe de pulvérisation s'alimentant dans ces réservoirs, et donc d'aspirer l'intégralité du volume utile de chaque réservoir. Enfin, selon un mode de réalisation, l'invention permet aussi de détecter une anomalie, telle qu'une buse bouchée, de manière automatique, tout en laissant à l'utilisateur la possibilité de réaliser une purge à distance.

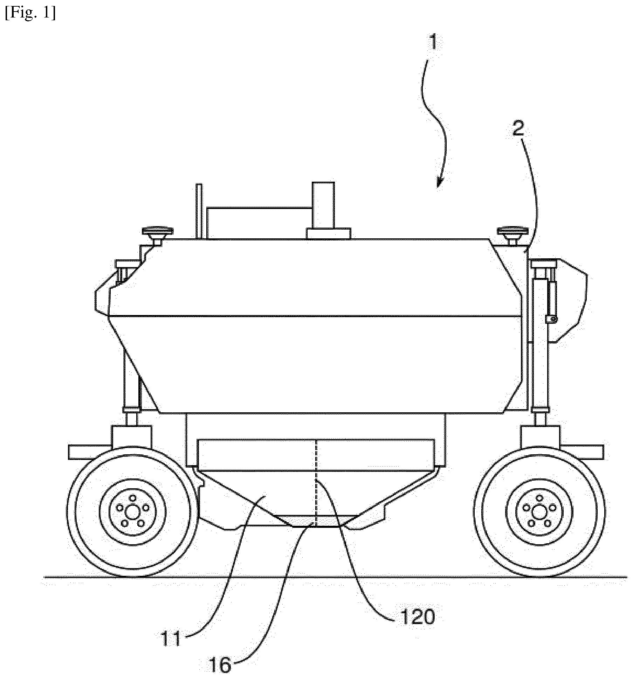

En référence aux figures 1 à 4, la présente invention s'applique à un engin agricole de pulvérisation, plus spécifiquement à un engin agricole autonome de pulvérisation 1. L'engin agricole autonome de pulvérisation 1 représenté comprend une ossature 2 et des réservoirs latéraux 11 et 12 destinés à contenir un produit de traitement 16, notamment un liquide ou une bouillie, pour traiter des cultures, notamment des vignes.

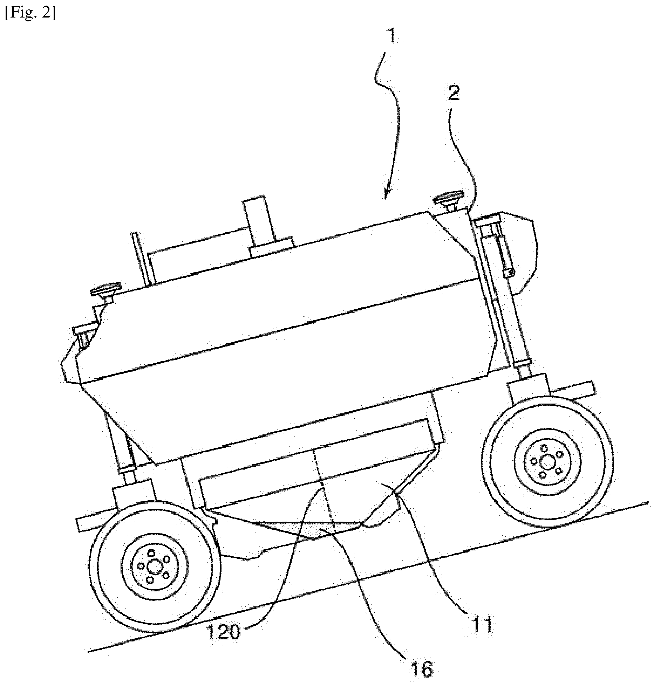

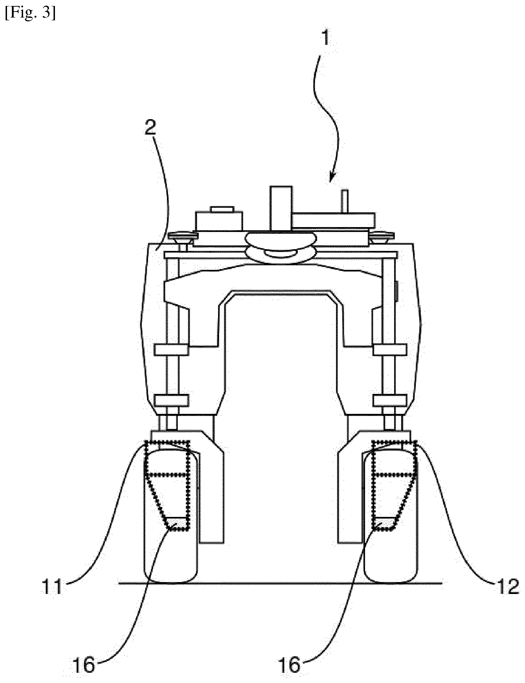

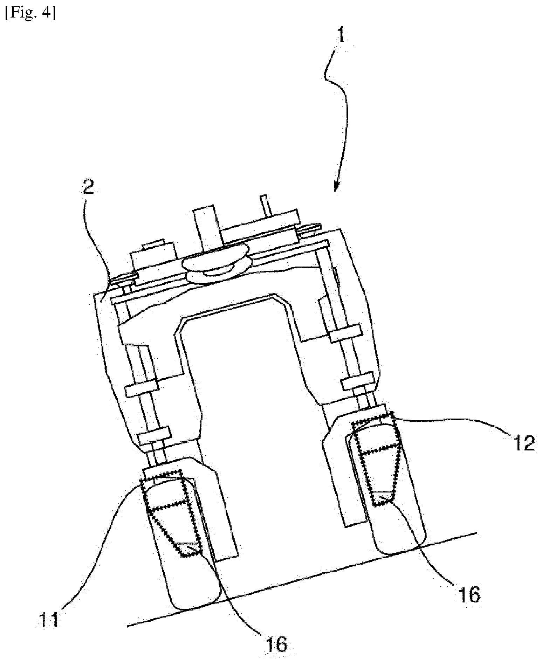

Sur la [Fig.1], l'engin agricole autonome de pulvérisation 1 est vu de côté et se trouve en terrain plat. Sur la [Fig.2] l'engin agricole autonome de pulvérisation 1 est vu de côté et se trouve sur un terrain en pente. Sur la [Fig.3], on représente l'engin agricole autonome de pulvérisation 1 en coupe transversale sur un terrain plat. Sur la [Fig.4], on représente l'engin agricole autonome de pulvérisation 1 en coupe transversale sur un terrain en dévers.

Sur les figures 2 et 4, on constate que le niveau du produit de traitement compense les effets de pente ou de dévers. Dans l'état de l'art, cela peut entraîner des débordements et des transferts de masse d'un réservoir à l'autre d'où il peut résulter un déséquilibre risquant de favoriser un renversement de l'engin, ou encore des pertes de produits de traitement. De façon générale, l'objectif de l'invention est de permettre une gestion améliorée de l'équilibre des masses de produit de traitement 16 contenu dans les réservoirs latéraux 11, 12. L'invention permet aussi une gestion améliorée de l'aspiration en fond de réservoirs latéraux 11, 12.

Le principe général est celui d'une aspiration séquencée dans un réservoir latéral puis dans l'autre, pendant des durées prédéterminées ; durant chaque séquence, toute quantité de produit de traitement aspiré dans un réservoir latéral 11, 12, puis récupérée, retourne dans le même réservoir latéral 11, 12.

La séquence d'aspiration peut être basée sur une durée d'aspiration fixe, ou éventuellement variable en fonction d'un différentiel de niveau mesuré dans les réservoirs latéraux 11, 12 via des capteurs de niveau installés dans lesdits réservoirs latéraux 11, 12. Le mode de réalisation préféré est basé sur une durée d'aspiration fixe, notamment associée à une détection de différentiel de niveau maximum entre les réservoirs latéraux 11, 12, comme décrit ultérieurement.

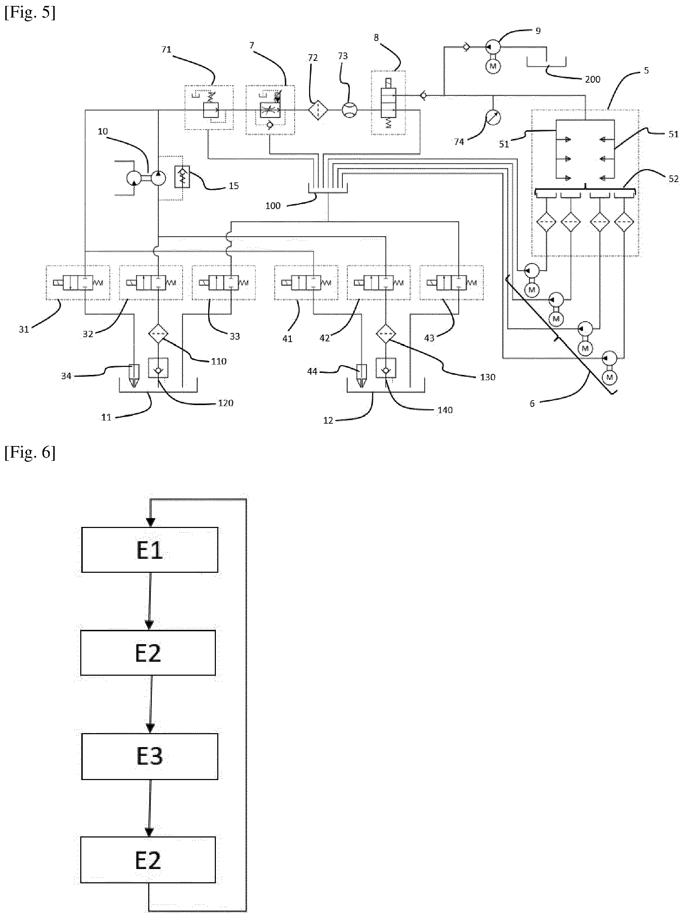

En référence à la [Fig.5], l'engin agricole autonome de pulvérisation et le procédé d'aspiration séquencée selon l'invention vont désormais être décrits en détail.

Le schéma de la [Fig.5] représente un schéma du système embarqué par l'engin agricole autonome de pulvérisation 1 visible sur les figures 1 à 4.

On retrouve les réservoirs latéraux 11, 12. L'engin agricole autonome de pulvérisation 1 comprend un système de pulvérisation 5 qui comporte de préférence, comme représenté, des panneaux de confinement 51 et des cuves de récupération 52 de produit de traitement permettant de récupérer une partie du produit de traitement pulvérisé puis recueilli par les panneaux de confinement 51.

Le produit de traitement recueilli dans les cuves de récupération 52 peut être pompé via des pompes, notamment des pompes péristaltiques 6, afin d'être reversé dans une cuve tampon 100.

Il faut noter que la partie de l'engin agricole autonome de pulvérisation comprenant les panneaux de confinements 51, les cuves de récupération 52 et les pompes péristaltiques 6 est optionnelle, bien qu'elle fasse partie du mode de réalisation préféré représenté.

De même, selon un mode de réalisation alternatif, il faut noter que le nombre de réservoirs peut être supérieur à deux. En plus des premier et deuxième réservoirs latéraux 11, 12, l'engin agricole autonome de pulvérisation 1 peut ainsi embarquer un ou plusieurs réservoirs additionnels. Tout ce qui est décrit ci-après avec deux réservoirs latéraux 11, 12 s'appliquent mutatis mutandis au cas où le nombre de réservoirs contenant du produit de traitement est supérieur à deux. L'objectif reste d'assurer un équilibre des masses des réservoirs, autrement dit un différentiel limité entre les niveaux de produit de traitement restant dans les différents réservoirs.

De préférence également, l'engin agricole autonome de pulvérisation comprend par ailleurs un circuit de purge avec un réservoir de produit de rinçage 200, contenant par exemple de l'eau, associé à une pompe de purge 9, pour le rinçage des buses de pulvérisation du système de pulvérisation 5, par exemple lors d'un dysfonctionnement. En outre, un système de rinçage classique, pour le rinçage des canalisations, des flexibles, des vannes, réservoirs, cuves, buses, etc. de l'engin, peut être ajouté en complément du circuit de purge évoqué précédemment. L'engin agricole autonome de pulvérisation 1 comprend par ailleurs une pompe de pulvérisation 10 pouvant être couplée à un dispositif de soupape de sécurité 15. La pompe de pulvérisation 10 permet d'aspirer du produit de traitement dans l'un ou l'autre ou les deux réservoirs latéraux 11, 12, en fonction d'une commande des vannes 31, 32, 33, 41, 42, 43 qui seront décrites ci-après. Les vannes 31, 32, 33, 41, 42, 43 sont par exemple des vannes électriques. Il peut aussi s'agir de vannes pneumatiques.

Notamment, le refoulement de produit de traitement aspiré par la pompe de pulvérisation 10 peut être automatiquement régulé via la vanne de régulation 7 en fonction d'un volume hectare de produit de traitement à pulvériser. La régulation automatique de la vanne de régulation 7 peut par ailleurs être configurée pour adapter le débit de produit de traitement transféré au système de pulvérisation 5, en continu, à la vitesse d'avancement de l'engin agricole autonome de pulvérisation 1. La régulation automatique de la vanne de régulation 7 peut également tenir compte d'autres facteurs comme le type et la quantité de buses installées dans le système de pulvérisation 5, la viscosité du produit de traitement à pulvériser, la densité de végétation à traiter sur la parcelle (notamment la densité du vignoble, le cas échéant), etc.

Selon un mode de réalisation, la régulation automatique du débit de produit de traitement transféré au système de pulvérisation 5, réalisée par le biais de la vanne de régulation 7, est mise en oeuvre au moyen d'un débitmètre 73 monté en sortie de la vanne de régulation 7 ou au moyen d'un capteur de pression 74 installé à proximité du système de pulvérisation 5. Si la régulation est réalisée via le débitmètre 73 décrit précédemment, il est possible d'utiliser au surplus le capteur de pression 74 afin d'obtenir une redondance de mesure permettant la détection automatique d'anomalie. Réciproquement, si la régulation est réalisée via le capteur de pression 74 décrit précédemment, il est possible d'utiliser au surplus le débitmètre 73 afin d'obtenir une redondance de mesure permettant la détection automatique d'anomalie.

La détection d'une anomalie, par exemple une buse bouchée dans le système de pulvérisation 5, est notamment réalisée en mesurant constamment le rapport entre la pression mesurée par le capteur de pression 74 et le débit mesuré par le débitmètre 73. Une anomalie est détectée si ce rapport dépasse un seuil maximal prédéfini, et ce pendant une durée supérieure à une durée de déclenchement prédéfinie. Lors de la détection d'une anomalie, conformément à la description précédente, l'utilisateur est averti et peut choisir de mettre en pause le traitement afin de lancer une étape de purge, décrite ultérieurement.

Partant du premier réservoir latéral 11, l'engin agricole autonome de pulvérisation comprend par exemple une canne d'aspiration 120 avec de préférence, branché en série, un filtre d'aspiration 110.

Pour que la pompe de pulvérisation 10 puisse aspirer du produit de traitement dans le premier réservoir latéral 11, il est nécessaire que la première vanne d'aspiration 32 soit ouverte.

Symétriquement, partant du deuxième réservoir latéral 12, l'engin agricole autonome de pulvérisation comprend par exemple une canne d'aspiration 140 avec de préférence, branché en série, un filtre d'aspiration 130.

Pour que la pompe de pulvérisation 10 puisse aspirer du produit de traitement dans le deuxième réservoir latéral 12, il est nécessaire que la deuxième vanne d'aspiration 42 soit ouverte.

La vanne de régulation 7 régule le débit de produit de traitement refoulé par la pompe de pulvérisation 10 qui est acheminé jusqu'au système de pulvérisation 5 via une vanne de pulvérisation 8 à condition que la vanne de pulvérisation 8 soit ouverte. Si la vanne de pulvérisation 8 est fermée, le produit de traitement est refoulé et aboutit dans la cuve tampon 100. En aval de la vanne de régulation 7, un filtre 72 est de préférence également prévu. Un dispositif réducteur de débit manuel 71 peut aussi être prévu en amont de la vanne de régulation 7. Le dispositif réducteur de débit 71 peut être disposé en amont du filtre ou entre le filtre 72 et la vanne de régulation 7 (comme représenté sur la [Fig.5]). Dans ce cas, la portion de produit de traitement excédant le débit régulé par la vanne de régulation 7 est acheminée jusqu'à la cuve tampon 100. La portion de produit de traitement aspirée par la pompe de pulvérisation 10 dans l'un ou l'autre ou les deux réservoirs latéraux 11, 12 est réacheminé vers le premier réservoir latéral 11 ou vers le deuxième réservoir latéral 12 ou vers les deux réservoirs latéraux 11, 12, en fonction de l'origine du produit de traitement, conformément au principe d'aspiration séquencée brièvement décrit précédemment et qui est décrit plus en détail ci-après.

La première vanne d'agitation 31 autorise ou interdit, en fonction d'une commande, le retour de produit de traitement vers le premier réservoir latéral 11 dans lequel, de préférence, un agitateur 34 injecte le produit de traitement réacheminé vers le premier réservoir latéral 11 via la première vanne d'agitation 31, pour créer une agitation, autrement dit du mouvement, dans le produit de traitement contenu dans le premier réservoir latéral 11.

Réciproquement, la deuxième vanne d'agitation 41 autorise ou interdit, en fonction d'une commande, le retour de produit de traitement vers le deuxième réservoir latéral 12 dans lequel, de préférence, un agitateur 44 injecte le produit de traitement réacheminé vers le deuxième réservoir latéral 12 via la deuxième vanne d'agitation 41, pour créer une agitation, autrement dit du mouvement, dans le produit de traitement contenu dans le deuxième réservoir latéral 12.

Le produit de traitement recueilli dans la cuve tampon 100 retourne dans l'un, l'autre ou les deux réservoirs latéraux 11, 12, en fonction de son origine. La première vanne de retour 33 autorise ou interdit, en fonction d'une commande, le retour de produit de traitement issu de la cuve tampon 100 vers le premier réservoir latéral 11. Réciproquement, la deuxième vanne de retour 43 autorise ou interdit, en fonction d'une commande, le retour de produit de traitement issu de la cuve tampon 100 vers le deuxième réservoir latéral 12.

L'engin agricole autonome de pulvérisation 1 décrit ci-dessus est configuré pour assurer un équilibre des masses des deux réservoirs latéraux 11, 12, grâce à un principe d'aspiration séquencée.

En particulier, l'engin agricole autonome de pulvérisation comprend un module de séquençage configuré pour envoyer des commandes pour contrôler notamment la pompe de pulvérisation 10, la première vanne d'aspiration 32, la première vanne d'agitation 31, la première vanne de retour 33, la deuxième vanne d'aspiration 42, la deuxième vanne d'agitation 41 et la deuxième vanne de retour 43 aux fins d'exécuter les étapes décrites ci-après.

En référence à la [Fig.6], l'aspiration séquencée comprend :
- une première étape d'aspiration E1 durant laquelle on aspire du produit de traitement dans le premier réservoir latéral 11 pendant une durée d'aspiration isolée prédéfinie, par exemple égale à une minute ; pendant la première étape d'aspiration E1, on n'aspire pas dans le deuxième réservoir latéral 12 ;
- une étape de transition E2, optionnelle mais mise en oeuvre dans le mode de réalisation préféré, durant laquelle on aspire du produit de traitement dans le premier réservoir latéral 11 et dans le deuxième réservoir latéral 12, simultanément, pendant un court laps de temps, par exemple égal à environ deux secondes ; l'étape de transition E2 vise à éviter tout effet de cavitation dans la pompe de pulvérisation 10 et à laisser le temps aux vannes 31, 32, 33, 41, 42, 43 de changer d'état ;
- une deuxième étape d'aspiration E3 durant laquelle on aspire du produit de traitement dans le deuxième réservoir latéral 12 pendant la durée d'aspiration prédéfinie, par exemple égale à une minute ; pendant la deuxième étape d'aspiration E3, on n'aspire pas dans le premier réservoir latéral 11.

Pendant la première étape d'aspiration E1, la première vanne d'aspiration 32, la première vanne d'agitation 31 et la première vanne de retour 33 sont ouvertes et, inversement, la deuxième vanne d'aspiration 42, la deuxième vanne d'agitation 41 et la deuxième vanne de retour 43 sont fermées.

De ce fait, pendant la première étape d'aspiration E1, la pompe de pulvérisation 10 ne peut aspirer du produit de traitement que dans le premier réservoir latéral 11. Également, on interdit tout transfert de produit de traitement du premier réservoir latéral 11 au deuxième réservoir latéral 12. Autrement dit, toute quantité de produit de traitement aspirée dans le premier réservoir latéral 11 et renvoyée vers les réservoirs latéraux ne peut aboutir que dans le premier réservoir latéral 11.

Pendant la deuxième étape d'aspiration E3, la première vanne d'aspiration 32, la première vanne d'agitation 31 et la première vanne de retour 33 sont fermées, tandis que la deuxième vanne d'aspiration 42, la deuxième vanne d'agitation 41 et la deuxième vanne de retour 43 sont ouvertes.

De ce fait, pendant la deuxième étape d'aspiration E3, la pompe de pulvérisation 10 ne peut aspirer du produit de traitement que dans le deuxième réservoir latéral 12. Également, on interdit tout transfert de produit de traitement du deuxième réservoir latéral 12 au premier réservoir latéral 11. Autrement dit, toute quantité de produit de traitement aspirée dans le deuxième réservoir latéral 11 et renvoyée vers les réservoirs latéraux ne peut aboutir que dans le deuxième réservoir latéral 11.

Pendant l'étape de transition E2 entre la première étape d'aspiration E1 et la deuxième étape d'aspiration E3, les première et deuxième vanne d'agitation 31, 41, les première et deuxième vanne d'aspiration 32, 42 et les première et deuxième vannes de retour 33, 43 sont toutes ouvertes. Comme indiqué précédemment, l'étape de transmission est de courte durée, soit environ deux secondes.

Après la deuxième étape d'aspiration E3, une nouvelle étape de transition E2 est mise en oeuvre. La première étape d'aspiration E1, l'étape de transition E2, la deuxième étape d'aspiration E3 puis à nouveau l'étape de transition E2 s'enchaînent ainsi de façon itérative.

Lorsqu'au moins des réservoirs latéraux 11, 12 est presque vide, cette détection pouvant notamment être réalisée par l'intermédiaire de capteurs de niveaux installés dans les réservoirs latéraux, une étape spéciale de gestion de fin de cycle peut être mise en oeuvre.

L'étape spéciale de gestion de fin de cycle va maintenant être décrite en détail. Si au cours de la première étape d'aspiration E1, précédemment décrit, le capteur de niveau mis en place dans le premier réservoir latéral 11 détecte un niveau de produit de traitement restant inférieur ou égal à un premier niveau déclencheur prédéfini, par exemple cinq litres, et si le niveau de produit de traitement restant dans le deuxième réservoir latéral 12 est supérieur à un deuxième niveau déclencheur prédéfini (égale ou non au premier niveau déclencheur, notamment en fonction de la capacité respective des réservoirs latéraux 11, 12), alors l'étape de transition E2 se substitue à la première étape d'aspiration E1 et est suivie de la deuxième étape d'aspiration E3. L'étape E3 est alors maintenue jusqu'à l'atteinte du deuxième niveau déclencheur prédéfini. Une fois le deuxième niveau déclencheur atteint dans le deuxième réservoir latéral 12, le traitement cesse et un remplissage des réservoirs latéraux 11, 12 est nécessaire.

Réciproquement, si au cours de la deuxième étape d'aspiration E3, précédemment décrite, le capteur de niveau mis en place dans le deuxième réservoir latéral 12 détecte un niveau inférieur ou égal au deuxième niveau déclencheur prédéfini, par exemple cinq litres, et si le niveau du premier réservoir latéral 11 est supérieur au premier niveau déclencheur prédéfini, alors l'étape de transition E2 se substitue à la deuxième étape d'aspiration E3 et est suivie de la première étape d'aspiration E1. La première étape d'aspiration E1 est alors maintenue jusqu'à l'atteinte du premier niveau déclencheur prédéfini dans le premier réservoir latéral 11. Une fois le premier niveau déclencheur atteint, le traitement cesse et un remplissage des réservoirs est nécessaire.

Entre outre, si un différentiel de niveau supérieur à un différentiel prédéfini, par exemple égal à 15% de la capacité d'un réservoir latéral, est détecté entre les réservoirs latéraux 11, 12 au moyen d'une comparaison des niveaux respectifs mesurés par les capteurs de niveau précédemment décrits, alors l'étape d'aspiration dans le réservoir latéral ayant le niveau le plus bas est ignorée jusqu'à ce que le différentiel change de sens.

Dans le cas où une anomalie est détectée et / ou sur demande de l'utilisateur, et ce quel que soit l'étape en cours, une étape de purge peut être déclenchée. L'étape de purge consiste à fermer la vanne de pulvérisation 8 et activer la pompe de purge 9 pendant un temps de purge prédéfini, par exemple 10 secondes. Une purge ne peut être suivie d'une autre purge. Aussi, dans le cas où une anomalie persiste lors de la reprise de la pulvérisation du produit de traitement, et ce malgré le fait qu'une purge a été réalisée, alors il peut être prévu que l'engin agricole autonome de pulvérisation 1 avertisse l'utilisateur.

L'invention prévoit en outre une forme particulière des réservoirs latéraux 11, 12, de sorte à favoriser l'aspiration du produit de traitement qu'ils contiennent, y compris dans les configurations de terrain telles que celle représentées sur les figures 2 et 4, c'est-à-dire en pente ou en dévers. Les réservoirs latéraux 11, 12 présentent ainsi une forme en « diamant inversé », avec des parois latérales, notamment au moins deux parois latérales, orientées pour diriger le produit de traitement vers un siphon relié à une voie d'aspiration par laquelle la pompe de pulvérisation 10 aspire le produit de traitement. Les pentes de ces surfaces doivent de préférence être calculées de sorte à être supérieures aux pentes ou dévers franchis par l'engin agricole autonome de pulvérisation afin d'éviter toute accumulation de liquide dans des zones des réservoirs latéraux non connectées au siphon.

Selon un mode de réalisation, chaque réservoir latéral 11, 12 peut contenir 300 litres de produit de traitement. Selon d'autres modes de réalisation, chaque réservoir latéral 11, 12 contient 150 litres ou encore 200 litres de produit de traitement.

## Revendications

1. Engin agricole autonome de pulvérisation (1) comprenant un premier et un deuxième réservoirs latéraux (11, 12) disposés substantiellement entre une roue avant et une roue arrière respectivement de chaque côté de l'engin, l'engin agricole autonome de pulvérisation (1) comprenant par ailleurs un système de pulvérisation (5), au moins une pompe de pulvérisation (10), une première vanne d'aspiration (32) autorisant ou interdisant l'aspiration de produit de traitement dans le premier réservoir latéral (11), une deuxième vanne d'aspiration (42) autorisant ou interdisant l'aspiration de produit de traitement dans le deuxième réservoir latéral (12), une vanne de régulation (7) couplée à une vanne de pulvérisation (8) configurées pour fournir du produit de traitement au système de pulvérisation (5), **caractérisé en ce que** l'engin agricole comprend un module de séquençage configuré de sorte que :
durant une première étape d'aspiration (E1), la première vanne d'aspiration (32) est ouverte et la deuxième vanne d'aspiration est fermée (42), de sorte qu'on aspire du produit de traitement uniquement dans le premier réservoir latéral (11) au moyen de la pompe de pulvérisation (10), pendant une durée d'aspiration isolée prédéfinie, par exemple égale à une minute ;
durant une étape de transition (E2) faisant suite à la première étape d'aspiration (E1), la première vanne d'aspiration (32) et la deuxième vanne d'aspiration (42) sont ouvertes, de sorte qu'on aspire du produit de traitement simultanément dans le premier réservoir latéral (11) et
dans le deuxième réservoir latéral (12) au moyen de la pompe de pulvérisation (10), pendant une durée de transition prédéfinie, courte par rapport à la durée d'aspiration isolée prédéfinie, par exemple égale à deux secondes ;
durant une deuxième étape d'aspiration (E3), faisant suite à l'étape de transition (E2), la deuxième vanne d'aspiration (42) est ouverte et la première vanne d'aspiration (32) est fermée, de sorte qu'on aspire du produit de traitement uniquement dans le deuxième réservoir latéral (12) au moyen de la pompe de pulvérisation (10), pendant la durée d'aspiration isolée prédéfinie, par exemple égale à une minute,
le module de séquençage étant par ailleurs configuré pour mettre en oeuvre successivement et de façon itérative la première étape d'aspiration (E1), l'étape de transition (E2), la deuxième étape d'aspiration (E3) puis à nouveau l'étape de transition (E2).

2. Engin agricole autonome de pulvérisation (1) selon la revendication 1, comprenant par ailleurs une cuve tampon (100) connectée d'une part à la vanne de régulation (7) et d'autre part aux premier et deuxième réservoirs latéraux (11, 12), la cuve tampon recevant du surplus de produit de traitement issu de la vanne de régulation (7), le surplus de produit de traitement contenu dans la cuve tampon (100) étant refoulé vers les premier et deuxième réservoirs latéraux (11, 12), l'engin agricole autonome comprenant par ailleurs une première vanne de retour (33) et une deuxième vanne de retour (43), le module de séquençage étant configuré de sorte que la première vanne de retour (33) est ouverte pendant la première étape d'aspiration (E1) et pendant l'étape de transition (E2) et fermée pendant la deuxième étape d'aspiration (E3) et de sorte que la deuxième vanne de retour (43) est ouverte pendant la deuxième étape d'aspiration (E3) et pendant l'étape de transition (E2) et fermée pendant la première étape d'aspiration (E1).

3. Engin agricole autonome de pulvérisation (1) selon la revendication 2, dans lequel le système de pulvérisation (5) comprend au moins un panneau de confinement (51) configuré pour collecter du produit de traitement après pulvérisation et l'acheminer vers au moins une cuve de récupération (52), l'engin agricole autonome de pulvérisation (1) comprenant par ailleurs au moins une pompe de récupération (6), notamment une pompe péristaltique, pour acheminer le produit de traitement contenu dans la cuve de récupération (52) vers la cuve tampon (100).

4. Engin agricole autonome de pulvérisation (1) selon l'une des revendication 2 à 3, comprenant par ailleurs une première vanne d'agitation (31) et une deuxième vanne d'agitation (41), une portion de produit de traitement aspirée dans le premier réservoir latéral (11) et/ou dans le deuxième réservoir latéral (12) étant refoulée vers les premier et deuxième réservoirs latéraux (11, 12) en amont de la vanne de régulation (7), le module de séquençage étant configuré de sorte que la première vanne d'agitation (31) est ouverte pendant la première étape d'aspiration (E1) et pendant l'étape de transition (E2) et fermée pendant la deuxième étape d'aspiration (E3) et de sorte que la deuxième vanne d'agitation (41) est ouverte pendant la deuxième étape d'aspiration (E3) et pendant l'étape de transition (E2) et fermée pendant la première étape d'aspiration (E1).

5. Engin agricole autonome de pulvérisation (1) selon la revendication 4, comprenant par ailleurs un premier injecteur d'agitation (34) agencé dans le premier réservoir latéral (11) et un deuxième injecteur d'agitation (44) agencé dans le deuxième réservoir latéral (12), le premier injecteur d'agitation (33) étant configuré pour injecter le surplus de produit de traitement refoulé via la première vanne d'agitation (31) dans le premier réservoir latéral (11) de façon à entretenir un mouvement de produit de traitement dans le premier réservoir latéral (11) et, respectivement, le deuxième injecteur d'agitation (44) étant configuré pour injecter le surplus de produit de traitement refoulé via la deuxième vanne d'agitation (41) dans le deuxième réservoir latéral (12) de façon à entretenir un mouvement de produit de traitement dans le deuxième réservoir latéral (12).

6. Enfin agricole autonome de pulvérisation (1) selon l'une des revendications précédentes, dans lequel les premier et deuxième réservoirs latéraux (11, 12) présentent une forme en diamant inversé présentant au moins deux parois latérales, forme selon laquelle chaque paroi latérale est orientée de sorte à orienter le produit de traitement en direction d'un siphon aboutissant dans une voie d'aspiration reliée à la pompe de pulvérisation (10).

7. Engin agricole autonome de pulvérisation (1) selon l'une des revendications précédentes, dans lequel le module de séquençage est en outre configuré pour mettre en oeuvre une étape finale de gestion de fin de cycle, lorsque la quantité de produit de traitement contenue dans l'un des premier et deuxième réservoirs latéraux (11, 12) passe sous un seuil déclencheur prédéfini.

8. Procédé d'aspiration séquencée pour un engin agricole autonome de pulvérisation (1) comprenant un premier réservoir latéral (11) et un deuxième réservoir latéral (12) contenant chacun du produit de traitement, le procédé d'aspiration séquencée comprenant :
une première étape d'aspiration (E1), durant laquelle on aspire du produit de traitement uniquement dans le premier réservoir latéral (11) et on bloque tout transfert de produit de traitement depuis le premier réservoir latéral (11) vers le deuxième réservoir latéral (12), pendant une durée d'aspiration isolée prédéfinie, par exemple égale à une minute ;
une étape de transition (E2) faisant suite à la première étape d'aspiration (E1), durant laquelle on aspire du produit de traitement simultanément dans le premier réservoir latéral (11) et dans le deuxième réservoir latéral (12), pendant une durée de transition prédéfinie, courte par rapport à la durée d'aspiration isolée prédéfinie, par exemple égale à deux secondes ;
une deuxième étape d'aspiration (E3), faisant suite à l'étape de transition (E2), durant laquelle on aspire du produit de traitement uniquement dans le deuxième réservoir latéral (12) et on bloque tout transfert de produit de traitement depuis le deuxième réservoir latéral (12) vers le premier réservoir latéral (11), pendant la durée d'aspiration isolée prédéfinie, par exemple égale à une minute,
la première étape d'aspiration (E1), l'étape de transition (E2), la deuxième étape d'aspiration (E3) puis à nouveau l'étape de transition (E2) étant mises en oeuvre de façon itérative.

9. Procédé selon la revendication précédente, comprenant par ailleurs une étape finale de gestion de fin de cycle, mise en oeuvre lorsque la quantité de produit de traitement contenue dans l'un des premier et deuxième réservoirs latéraux (11, 12) passe sous un seuil déclencheur prédéfini, l'étape de gestion de fin de cycle comprenant la substitution de l'étape de transition (E2) à la première ou à la deuxième étape d'aspiration (E1, E3), selon le cas, correspondant à l'aspiration de produit de traitement dans celui parmi le premier et le deuxième réservoirs latéraux (11, 12) qui contient une quantité de produit de traitement inférieure au seuil déclencheur prédéfini.

10. Procédé selon la revendication 8 ou 9, comprenant la mesure du niveau de produit de traitement dans chacun des premier et deuxième réservoirs latéraux (11, 12) et, lorsque les niveaux de produit de traitement dans les premier et deuxième réservoirs latéraux (11, 12) sont tous deux inférieurs au seuil déclencheur prédéfini, le procédé d'aspiration séquencée est stoppé.

11. Procédé selon la revendication 10, comprenant la mesure du niveau de produit de traitement dans chacun des premier et deuxième réservoirs latéraux (11, 12) et la comparaison des niveaux de produit de traitement respectifs dans les premier et deuxième réservoirs latéraux à un différentiel prédéfini, par exemple égal à 15% de la contenance d'un réservoir latéral ; si le différentiel de niveau de produit de traitement entre les premier et deuxième réservoirs latéraux (11, 12) est supérieur au différentiel prédéfini, alors la première étape d'aspiration (E1) ou la deuxième étape d'aspiration (E2) est ignorée pour celui parmi le premier et le deuxième réservoirs latéraux (11, 12) qui a le niveau de produit de traitement le plus bas, jusqu'à ce que le différentiel de niveau de produit de traitement entre les premier et deuxième réservoirs latéraux (11, 12) change de sens.

## Patentansprüche

1. Selbstfahrende landwirtschaftliche Sprühvorrichtung (1), umfassend einen ersten und einen zweiten seitlichen Behälter (11, 12), die substantiell zwischen einem vorderen Rad und einem hinteren Rad jeweils auf jeder Seite der Vorrichtung angeordnet sind, wobei die selbstfahrende landwirtschaftliche Sprühvorrichtung (1) ferner ein Sprühsystem (5), mindestens eine Sprühpumpe (10), ein erstes Ansaugventil (32), das das Ansaugen von Behandlungsprodukt in den ersten seitlichen Behälter (11) gestattet oder untersagt, ein zweites Ansaugventil (42), das das Ansaugen von Behandlungsprodukt in den zweiten seitlichen Behälter (12) gestattet oder untersagt, ein Regelventil (7), das mit einem Sprühventil (8), gekoppelt ist, die konfiguriert sind, um dem Sprühsystem (5) Behandlungsprodukt bereitzustellen, umfasst, **dadurch gekennzeichnet, dass** die landwirtschaftliche Vorrichtung ein Sequenzierungsmodul umfasst, das derart konfiguriert ist, damit:
während eines ersten Ansaugschritts (E1) das erste Ansaugventil (32) geöffnet ist und das zweite Ansaugventil geschlossen ist (42), so dass Behandlungsprodukt nur in den ersten seitlichen Behälter (11) mittels der Sprühpumpe (10) während einer vorbestimmten isolierten Ansaugdauer angesaugt wird, die beispielsweise gleich einer Minute ist;
während eines Übergangsschritts (E2), der dem ersten Ansaugschritt (E1) folgt, das erste Ansaugventil (32) und das zweite Ansaugventil (42) geöffnet sind, so dass Behandlungsprodukt gleichzeitig in den ersten seitlichen Behälter (11) und in den zweiten seitlichen Behälter (12) mittels der Sprühpumpe (10) während einer vorbestimmten Übergangsdauer angesaugt wird, die im Verhältnis zu der vorbestimmten isolierten Ansaugdauer kurz ist, die beispielsweise gleich zwei Sekunden ist;
während eines zweiten Ansaugschritts (E3), der dem Übergangsschritt (E2) folgt, das zweite Ansaugventil (42) geöffnet ist und das erste Ansaugventil (32) geschlossen ist, so dass Behandlungsprodukt nur in den zweiten seitlichen Behälter (12) mittels der Sprühpumpe (10) während der vorbestimmten isolierten Ansaugdauer angesaugt wird, die beispielsweise gleich einer Minute ist, wobei das Sequenzierungsmodul ferner konfiguriert ist, um nacheinander und wiederholend den ersten Ansaugschritt (E1), den Übergangsschritt (E2), den zweiten Ansaugschritt (E3), dann erneut den Übergangsschritt (E2) durchzuführen.

2. Selbstfahrende landwirtschaftliche Sprühvorrichtung (1) nach Anspruch 1, umfassend ferner einen Puffertank (100), der zum einen mit dem Regelventil (7) und zum anderen mit den ersten und zweite seitlichen Behälter (11, 12) verbunden ist, wobei der Puffertank überschüssiges Behandlungsprodukt aus dem Regelventil (7) erhält, wobei das überschüssige Behandlungsprodukt, das in dem Puffertank (100) enthalten ist, in den ersten und zweiten seitlichen Behälter (11, 12) gefördert wird, wobei die selbstfahrende landwirtschaftliche Vorrichtung ferner ein erstes Rücklaufventil (33) und ein zweites Rücklaufventil (43) umfasst, wobei das Sequenzierungsmodul derart konfiguriert ist, dass das erste Rücklaufventil (33) während des ersten Ansaugschritts (E1) und während des Übergangsschritts (E2) geöffnet ist und während des zweiten Ansaugschritts (E3) geschlossen ist und derart, dass das zweite Rücklaufventil (43) während des zweiten Ansaugschritts (E3) und während des Übergangsschritts (E2) geöffnet ist und während des ersten Ansaugschritts (E1) geschlossen ist.

3. Selbstfahrende landwirtschaftliche Sprühvorrichtung (1) nach Anspruch 2, wobei das Sprühsystem (5) mindestens ein Abschirmpaneel (51) umfasst, das konfiguriert ist, um Behandlungsprodukt nach dem Sprühen zu sammeln und zu mindestens einem Sammeltank (52) zu befördern, wobei die selbstfahrende landwirtschaftliche Sprühvorrichtung (1) ferner mindestens eine Sammelpumpe (6), insbesondere eine peristaltische Pumpe, umfasst, um das im Sammeltank (52) enthaltene Behandlungsprodukt zum Puffertank (100) zu befördern.

4. Selbstfahrende landwirtschaftliche Sprühvorrichtung (1) nach einem der Ansprüche 2 bis 3, umfassend ferner ein erstes Rührventil (31) und ein zweites Rührventil (41), wobei ein Anteil des in den ersten seitlichen Behälter (11) und/oder in den zweiten seitlichen Behälter (12) angesaugten Behandlungsprodukts zum ersten und zweiten seitlichen Behälter (11, 12) vor dem Regelventil (7) gefördert wird, wobei das Sequenzierungsmodul derart konfiguriert ist, dass das erste Rührventil (31) während des ersten Ansaugschritts (E1) und während des Übergangsschritts (E2) geöffnet ist und während des zweiten Ansaugschritts (E3) geschlossen ist und derart, dass das zweite Rührventil (41) während des zweiten Ansaugschritts (E3) und während des Übergangsschritts (E2) geöffnet ist und während des ersten Ansaugschritts (E1) geschlossen ist.

5. Selbstfahrende landwirtschaftliche Sprühvorrichtung (1) nach Anspruch 4, umfassend eine erste Rühreinleitung (34), die im ersten seitlichen Behälter (11) eingerichtet ist und eine zweite Rühreinleitung (44), die im zweiten seitlichen Behälter (12) eingerichtet ist, wobei die erste Rühreinleitung (33) konfiguriert ist, um gefördertes überschüssiges Behandlungsprodukt über das erste Rührventil (31) in den ersten seitlichen Behälter (11) einzuleiten, so dass eine Bewegung des Behandlungsprodukts im ersten seitlichen Behälter (11) aufrechterhalten wird und jeweils die zweite Rühreinleitung (44) konfiguriert ist, um gefördertes überschüssiges Behandlungsprodukt über das zweite Rührventil (41) in den zweiten seitlichen Behälter (12) einzuleiten, so dass eine Bewegung des Behandlungsprodukts im zweiten seitlichen Behälter (12) aufrechterhalten wird.

6. Selbstfahrende landwirtschaftliche Sprühvorrichtung (1) nach einem der vorangehenden Ansprüche, wobei der erste und zweite seitliche Behälter (11, 12) eine Form eines umgekehrten Diamanten aufweisen, der mindestens zwei Seitenwände aufweist, wobei gemäß der Form jede Seitenwand derart ausgerichtet ist, dass das Behandlungsprodukt in Richtung eines Siphons gelenkt wird, der in einem Ansaugweg führt, der mit der Sprühpumpe (10) verbunden ist.

7. Selbstfahrende landwirtschaftliche Sprühvorrichtung (1) nach einem der vorangehenden Ansprüche, wobei das Sequenzierungsmodul ferner konfiguriert ist, um einen finalen Zyklusende-Verwaltungsschritt durchzuführen, wenn die Menge Behandlungsprodukt, die in einem von dem ersten und zweiten seitlichen Behälter (11, 12) enthalten ist, unter eine vorbestimmte Auslöseschwelle sinkt.

8. Verfahren zur sequenzierten Ansaugung für eine selbstfahrende landwirtschaftliche Sprühvorrichtung (1), umfassend einen ersten seitlichen Behälter (11) und einen zweiten seitlichen Behälter (12), die jeweils Behandlungsprodukt enthalten, wobei das Verfahren zur sequenzierten Ansaugung umfasst:
einen ersten Ansaugschritt (E1), bei dem Behandlungsprodukt nur in den ersten seitlichen Behälter (11) angesaugt wird und jedweder Transfer von Behandlungsprodukt aus dem ersten seitlichen Behälter (11) zum zweiten seitlichen Behälter (12) während einer vorbestimmten isolierten Ansaugdauer blockiert wird, die beispielsweise gleich einer Minute ist;
einen Übergangsschritt (E2), der dem ersten Ansaugschritt (E1) folgt, bei dem Behandlungsprodukt gleichzeitig in den ersten seitlichen Behälter (11) und in den zweiten seitlichen Behälter (12) während einer vorbestimmten Übergangsdauer angesaugt wird, die im Verhältnis zu der vorbestimmten isolierten Ansaugdauer kurz ist, die beispielsweise gleich zwei Sekunden ist;
einen zweiten Ansaugschritt (E2), der dem Übergangsschritt (E2) folgt, bei dem Behandlungsprodukt nur in den ersten seitlichen Behälter (12) angesaugt wird und jedweder Transfer von Behandlungsprodukt aus dem ersten seitlichen Behälter (12) zum zweiten seitlichen Behälter (11) während einer vorbestimmten isolierten Ansaugdauer blockiert wird, die beispielsweise gleich einer Minute ist,
wobei der erste Ansaugschritt (E1), der Übergangsschritt (E2), der zweite Ansaugschritt (E3) dann erneut der Übergangsschritt (E2) wiederholend durchgeführt werden.

9. Verfahren nach vorangehendem Anspruch, umfassend ferner einen finalen Zyklusende-Verwaltungsschritt, der durchgeführt wird, wenn die Menge Behandlungsprodukt, die in einem von dem ersten und zweiten seitlichen Behälter (11, 12) enthalten ist, unter eine vorbestimmte Auslöseschwelle sinkt, wobei der finale Zyklusende-Verwaltungsschritt das Ersetzen des Übergangsschritts (E2) durch den ersten oder durch den zweiten Ansaugschritt (E1, E3) je nach Fall umfasst, entsprechend der Ansaugung von Behandlungsprodukt in jenen von dem ersten und dem zweiten seitlichen Behälter (11, 12), der eine Menge Behandlungsprodukt unterhalb der vorbestimmten Auslöseschwelle enthält.

10. Verfahren nach Anspruch 8 oder 9, umfassend das Messen des Behandlungsproduktstands in jedem von dem ersten und zweiten seitlichen Behälter (11, 12) und, wenn die Behandlungsproduktstände in dem ersten und zweiten seitlichen Behälter (11, 12) beide unter der vorbestimmten Auslöseschwelle liegen, das sequenzierte Ansaugverfahren gestoppt wird.

11. Verfahren nach Anspruch 10, umfassend das Messen des Behandlungsproduktstands in jedem von dem ersten und zweiten seitlichen Behälter (11, 12) und das Vergleichen der jeweiligen Behandlungsproduktstände in dem ersten und zweiten seitlichen Behälter mit einer vorbestimmten Differenz, von beispielsweise gleich 15 % des Fassungsvermögens eines seitlichen Behälters; wenn die Differenz des Behandlungsproduktstands zwischen dem ersten und zweiten seitlichen Behälter (11, 12) größer als die vorbestimmte Differenz ist, dann wird der erste Ansaugschritt (E1) oder der zweite Ansaugschritt (E2) für den von dem ersten und dem zweiten seitlichen Behälter (11, 12) ausgelassen, der den niedrigsten Behandlungsproduktstand hat, bis die Differenz des Behandlungsproduktstands zwischen dem ersten und zweiten seitlichen Behälter (11, 12) die Richtung wechselt.

## Claims

1. Autonomous agricultural spraying machine (1) comprising a first and a second side tanks (11, 12) substantially arranged between a front wheel and a rear wheel respectively on each side of the machine, the autonomous agricultural spraying machine (1) further comprising a spraying system (5), at least one spray pump (10), a first aspiration valve (32) allowing or prohibiting the aspiration of treatment product in the first side tank (11), a second aspiration valve (42) allowing or prohibiting the aspiration of treatment product in the second side tank (12), a regulation valve (7) coupled to a spray valve (8) configured to provide treatment product to the spraying system (5), **characterized in that** the agricultural machine comprises a sequencing module configured such that:
during a first aspiration step (E1), the first aspiration valve (32) is open and the second aspiration valve is closed (42), so that treatment product is aspirated only in the first side tank (11) by means of the spray pump (10), for a predefined isolated aspiration time, for example equal to one minute;
during a transition step (E2) following the first aspiration step (E1), the first aspiration valve (32) and the second aspiration valve (42) are open, so that treatment product is aspirated simultaneously in the first side tank (11) and in the second side tank (12) by means of the spray pump (10), for a predefined transition time, short relative to the predefined isolated aspiration time, for example equal to two seconds;
during a second aspiration step (E3), following the transition step (E2), the second aspiration valve (42) is open and the first aspiration valve (32) is closed, so that treatment product is only aspirated in the second side tank (12) by means of the spray pump (10), for the predefined isolated aspiration time, for example equal to one minute,
the sequencing module being further configured to successively and iteratively implement the first aspiration step (E1), the transition step (E2), the second aspiration step (E3) and then the transition step (E2) again.

2. Autonomous agricultural spraying machine (1) according to claim 1, further comprising a buffer tank (100) connected on the one hand to the regulation valve (7) and on the other hand to the first and second side tanks (11, 12), the buffer tank receiving excess treatment product from the regulation valve (7), the excess treatment product contained in the buffer tank (100) being discharged to the first and second side tanks (11, 12), the autonomous agricultural machine further comprising a first return valve (33) and a second return valve (43), the sequencing module being configured so that the first return valve (33) is open during the first aspiration step (E1) and during the transition step (E2) and closed during the second aspiration step (E3) and so that the second return valve (43) is open during the second aspiration step (E3) and during the transition step (E2) and closed during the first aspiration step (E1).

3. Autonomous agricultural spraying machine (1) according to claim 2, wherein the spraying system (5) comprises at least one containment panel (51) configured to collect post-spray treatment product and convey it to at least one recovery tank (52), the autonomous agricultural spraying machine (1) further comprising at least one recovery pump (6), in particular a peristaltic pump, to convey the treatment product contained in the recovery tank (52) to the buffer tank (100).

4. Autonomous agricultural spraying machine (1) according to one of claims 2 to 3, further comprising a first stirring valve (31) and a second stirring valve (41), a portion of the aspirated treatment product in the first side tank (11) and/or in the second side tank (12) being discharged to the first and second side tanks (11, 12) upstream of the regulation valve (7), the sequencing module being configured so that the first stirring valve (31) is open during the first aspiration step (E1) and during the transition step (E2) and closed during the second aspiration step (E3) and so that the second stirring valve (41) is open during the second aspiration step (E3) and during the transition step (E2) and closed during the first aspiration step (E1).

5. Autonomous agricultural spraying machine (1) according to claim 4, further comprising a first agitation injector (34) arranged in the first side tank (11) and a second agitation injector (44) arranged in the second side tank (12), the first agitation injector (33) being configured to inject the excess treatment product discharged via the first agitation valve (31) into the first side tank (11) in order to maintain a movement of the treatment product in the first side tank (11) and, respectively, the second agitation injector (44) being configured to inject the excess treatment product discharged via the second agitation valve (41) into the second side tank (12) so as to maintain a movement of treatment product in the second side tank (12).

6. Autonomous agricultural spraying machine (1) according to one of the preceding claims, wherein the first and second side tanks (11, 12) have an inverted diamond shape having at least two side walls, shape according to which each side wall is oriented so as to orient the treatment product towards a siphon leading into an aspiration path connected to the spray pump (10).

7. Autonomous agricultural spraying machine (1) according to one of the preceding claims, wherein the sequencing module is further configured to implement a final end-of-cycle management step, when the quantity of treatment product contained in one of the first and second side tanks (11, 12) falls below a predefined trigger threshold.

8. Sequenced aspiration method for an autonomous agricultural spraying machine (1) comprising a first side tank (11) and a second side tank (12) each containing treatment product, the sequenced aspiration method comprising:
a first aspiration step (E1), during which treatment product is aspirated only in the first side reservoir (11) and any transfer of treatment product from the first side reservoir (11) to the second side reservoir (12) is blocked, for a predefined isolated aspiration time, for example equal to one minute;
a transition step (E2) following the first aspiration step (E1), during which treatment product is aspirated simultaneously in the first side reservoir (11) and in the second side reservoir (12), for a predefined transition time, short relative to the predefined isolated aspiration time, for example equal to two seconds;
a second aspiration step (E3), following the transition step (E2), during which treatment product is aspirated only in the second side tank (12) and any transfer of treatment product from the second side tank (12) to the first side tank (11) is blocked, during the predefined isolated suction time, for example equal to one minute,
the first aspiration step (E1), the transition step (E2), the second aspiration step (E3) and then again the transition step (E2) being iteratively implemented.

9. Method according to the preceding claim, further comprising a final end-of-cycle management step, implemented when the quantity of treatment product contained in one of the first and second lateral tanks (11, 12) falls below a predefined trigger threshold, the end-of-cycle management step comprising substitution of the transition step (E2) with the first or second aspiration step (E1, E3), according to the case, corresponding to the aspiration of the treatment product in the one among the first and second lateral tanks (11, 12) which contains a quantity of treatment product below the predefined trigger threshold.

10. Method according to claim 8 or 9, comprising measuring the level of the treatment product in each of the first and second side tanks (11, 12) and, when the levels of the treatment product in the first and second side tanks (11, 12) are both below the predefined trigger threshold, the sequenced aspiration method is stopped.

11. Method according to claim 10, comprising measuring the level of the treatment product in each of the first and second side tanks (11, 12) and comparing the respective treatment product levels in the first and second side tanks to a predefined differential, for example equal to 15% of the capacity of a side tank; if the treatment product level differential between the first and second side tanks (11, 12) is greater than the preset differential, then the first aspiration step (E1) or second aspiration step (E2) is ignored for the one among the first and second side tanks (11, 12) that has the lowest treatment product level, until the treatment product level differential between the first and second side tanks (11, 12) changes direction.
